# EUROPÄISCHE PATENTSCHRIFT

(11) **EP 0 416 055 B1**
(45) Veröffentlichungstag und Bekanntmachung des Hinweises auf die Patenterteilung: **03.05.1995**
(21) Anmeldenummer: 90903142.9
(22) Anmeldetag: 22.02.1990
(51) Int. Cl.: G05B 15/02

(54) **REGELUNGSANORDNUNG**
CONTROL UNIT
DISPOSITIF DE REGLAGE

(30) Priorität: 18.03.1989 DE 3909041
(43) Veröffentlichungstag der Anmeldung: 13.03.1991
(73) Patentinhaber: ROBERT BOSCH GMBH, 70442 Stuttgart (DE)
(72) Erfinder: BITZER, Rainer, D-7252 Weil der Stadt (DE); ZIEHER, Peter, D-7147 Eberdingen (DE); HÄGELE, Karl-Heinz, D-7143 Vaihingen/Enz (DE); DITTMER, Bernd, D-7140 Ludwigsburg (DE); BURKEL, Rainer, D-7144 Asperg (DE)
(86) Internationale Anmeldenummer: DE9000119
(87) Internationale Veröffentlichungsnummer: WO9011555

(56) Entgegenhaltungen:
- DE-B- 1 302 216
- PATENT ABSTRACTS OF JAPAN vol. 9, no. 151 (P-367)(1874) 26 June 1985, &JP-A-60 27903 (CHINO SESAKUSHO K.K.)13 FEBRUAR 1985,
- I.E.E. CONFERENCE PUBLICATION: fourth UKAC control convention september 1971, LONDEN pg. 93- 97; G.A. CARTER et al.:"Direct hybrid control of an engine using adaptive logic, adaptive programming and self-organising storage"

## Beschreibung

Die Erfindung betrifft eine elektrische Regelungsanordnung zur Erzeugung analoger Stellgrößen nach der Gattung des Hauptanspruchs.

Überdies betrifft die Erfindung ein Verfahren zur Regelung analoger Größen mittels eines eine analoge, zeitdiskrete, amplitudenkontinuierliche Signalverarbeitung vornehmenden Reglers.

Stellsysteme, z. B. für ein Dämpferventil in der Fahrwerksregelung eines Kraftfahrzeuges haben Zeitkonstanten im Bereich von 1 bis 10 ms. Wird ein derartiger Steller digital geregelt, so muß ein hierfür erforderlicher Prozessor im betreffenden Steuergerät mit Abtastintervallen in der Größenordnung bis zu 100 »s die betreffende Reglerdifferenzen-Gleichung abarbeiten. Durch die Realisierung des digitalen Reglers mittels eines Rechenprogramms wird ein Großteil der Prozessorleistung verbraucht, insbesondere dann, wenn mehrere Regelkreise realisiert und bedient werden müssen. Da auf den Mikrocontrollern der Steuergeräte zumeist noch eine Vielzahl anderer Prozesse und Algorithmen programmiert sind, steht oft die von der Systemtheorie vorgegebene Abtastzeit und damit verbundene Rechenleistung für derartige Stellregelkreise nicht zur Verfügung. Abhilfe könnte gegebenenfalls der Einsatz von Multiprozessorsystemen schaffen.

Alternativ besteht die Möglichkeit, die Regelungsanordnung in herkömmlicher Analogtechnik zu realisieren. Allerdings ergibt sich der Nachteil, daß eine derartige Lösung sehr unflexibel ist und daß die Übertragungsfunktionen und Parameter der. Analog-Regler mit den Toleranzen der elektronischen Bauelemente streuen.

In dem Dokument Patent Abstracts from Japan, vol.9, Nr.151, (P-367)(1874), June 26, 1985 & JP,A,60-27 903 wird eine Regelungsanordnung zur Regelung analoger Größen beschrieben, wobei das Übertragungsverhalten des analog ausgelegten Reglers durch eine digitale Einstellung der Reglerparameter geschieht. Zur Realisierung dieser Regelungsanordnung sind Digital/Analog- und Analog/Digital-Wandler notwendig.

### Vorteile der Erfindung

Die erfindungsgermäße Regelungsanordnung mit den im Hauptanspruch genannten Merkmalen hat demgegenüber den Vorteil, daß sie in einfacher Weise der jeweils vorliegenden Regelungsaufgabe angepaßt werden kann und im wesentlichen frei von die Übertragungsfunktion bzw. die Reglerparameter verändernden Einflüssen ist.

Die obenerwähnte Einfachheit der erfindungsgemäßen Anordnung ist dadurch begründet, daß zur Erhaltung der Grundfunktionalität der Anordnung keine Digital/Analog- oder Analog/Digital-Wandler notwendig sind. Somit entfallen auch die Nachteile der hierdurch bedingten Einflüsse auf das Übertragungsverhalten des Reglers.

Durch die Realisierung der Regelungsanordnung sowohl in Digital- als auch in Analogtechnik können jeweils die Vorzüge dieser beiden Ausgestaltungen genutzt werden. Durch den analogen Aufbau des Reglers entfällt die digitale Abarbeitung der Reglerdifferenzen-Gleichung, so daß die hierdurch nicht benötigte Prozessorleistung für andere Aufgaben zur Verfügung steht. Die digitale Einstellanordnung läßt die Bereitstellung eines für die jeweilige Regelungsaufgabe optimierten Reglers zu. Durch die elektronische Verstellung der Übertragungsfunktion über die Anwahl einer entsprechenden Reglerstruktur (z. B. P-Regler (proportionales Verhalten), D-Regler (differentiales Verhalten), I-Regler (integrales verhalten) usw.) und/oder auch durch die digitale Variation der Reglerparameter, welche die Übertragungsfunktion größenmäßig festlegen, kann vor und auch während des Betriebes jederzeit eine auf das jeweilige Stellsystem abgestimmte Änderung vorgenommen werden. Dieses schafft eine große Flexibilität. Überdies ist es auch denkbar, daß gleichzeitig mehrere Reglergrundschaltungen bestimmter Reglerstruktur miteinander kombiniert werden, so daß sehr einfach z.B. ein PD-Regler oder ein PI-Regler oder aber auch ein PID-Regler usw. realisiert werden kann. Streuungen der Übertragungsfunktionen bzw. Parameter, wie sie bei Analogreglern durch die Toleranzen der Bauelemente auftreten, sind vermieden.

Nach einer Weiterbildung der Erfindung ist vorgesehen, daß die Einstellanordnung an einen Bus angeschlossen ist, über den die Reglerstruktur und/oder die Reglerparameter variiert werden können. Damit kann ein im Stellsystem ohnehin vorhandener Bus auch noch für die genannte Aufgabe herangezogen werden.

Bevorzugt ist ein Bus-Interface vorgesehen, das über den Bus mit einem Steuer-Register zum Einschalten der jeweiligen Reglerstruktur bzw. -strukturen und mit einem Parameter-Register zum Einstellen der jeweiligen Reglerparameter verbunden ist. Demgemäß sind über den am Bus-Interface angeschlossenen Prozessor das Steuer- und Parameter-Register zugänglich, um die gewünschte Regler-Abstimmung vornehmen zu können. Nach einem bevorzugten Ausführungsbeispiel steht das Bus-Interface mit einem Host-Prozessor in Verbindung. Die Anordnung kann so ausgebildet sein, daß jede Reglergrundschaltung über einen vom Steuerregister steuerbaren elektronischen Schalter mit einer Summierstelle verbindbar ist. Das Steuerregister nimmt die Anwahl und Steuerung des bzw. der elektronischen Schalter vor, so daß die jeweils zugehörige Reglergrundschaltung an die Summierstelle gelegt wird. Die Reglergrundschaltungen weisen Regler-Grundfunktionen, wie z. B. P-, I- oder D-Charakteristiken, auf. Überdies können weitere, noch zu definierende Funktionen, wie Schaltfunktionen, Kennlinien usw., realisiert werden.

Eine besonders einfache Möglichkeit der Variation der Reglerparameter ergibt sich dadurch, daß jeder Reglergrundschaltung eine vom Parameter-Register gesteuerte Steuerschaltung zugeordnet ist, die die Reglerparameter steuert. Die Reglerparameter werden mittels Switched-Capacitor-Elementen (SC-Elementen, geschalteten Kapazitäten) eingestellt. Dieses kann durch Hinzuschaltung von weiteren Kondensatoren zum SC-Element durch elektronische Schaltelemente und/oder durch Schaltfrequenzänderungen erfolgen.

Der analoge Soll- und Istwert wird jeweils einem Summenpunkt zugeführt, der an die Reglergrundschaltungen angeschlossen ist. Dabei ist die Zuführung des Soll- und des Istwertes über einen analogen Signalweg möglich. Alternativ kann die Anordnung jedoch auch so ausgebildet sein, daß jeweils ein Digital/Analog-Wandler (D/A-Wandler) für die Zuleitung des vom Bus-Interface kommenden Soll- und Istwertes an den Summenpunkt angeschlossen ist. Demgemäß werden Soll- und Istwert vom Prozessor kommend über das Bus-Interface auf die D/A-Wandler gegeben und die so gebildeten Analogwerte dem Summenpunkt zugeführt.

Vorzugsweise ist ein an den Bus und die Summierstelle angeschlossener Digital/Analog-Wandler zur Aufschaltung einer Stellgrößen-Komponente vorgesehen. Bei dieser Stellgrößenkomponente kann es sich beispielsweise um einen Kennfeldwert oder um einen Korrekturwert handeln. Hierdurch erhält der Prozessor die Möglichkeit, eine Kennfeld-Vorsteuerung bzw. einen Korrektureingriff vorzunehmen.

Um die Stellgröße direkt in Schaltsignale für Endstufen-Transistoren oder dergleichen umzusetzen, die das eigentliche Stellglied betreiben, ist an den Ausgang der Summierstelle ein Pulsbreitenmodulator angeschlossen. Für Endstufen im schaltenden Betrieb ist vorzugsweise ein unterlagerter Stromregelkreis vorgesehen. Desweiteren können noch Endstufen - und Steller - Diagnosefunktionen vorgesehen sein.

Bei dem Soll- und dem Istwert der erfindungsgemäßen Regelungsanordnung handelt es sich vorzugsweise um elektrische Spannungen. Mit der genannten Stromregelung wird vorzugsweise der Istwert-Strom geregelt.

Ein bevorzugter Schaltungsaufbau ergibt sich, wenn die Regelungsanordnung als integrierte Schaltung (IC-Schaltung) und/oder aus Hybrid-Schaltkreisen aufgebaut ist. Ein derartiges Regler-IC oder -Hybrid könnte vorzugsweise als Peripherie-Baustein für Mikroprozessoren bzw. für Mikrocontroller ausgelegt oder eine "Elektronik vor Ort"-Komponente mit CAN-Interface (-Controller) vorgesehen sein.

Die Erfindung betrifft ferner ein Verfahren zur Regelung analoger Größen mittels eines eine analoge Signalverarbeitung vornehmenden Reglers, wobei die Übertragungsfunktion und die diese größenmäßig bestimmenden Reglerparameter durch digitale Einstellung des Reglers bestimmt werden. Durch den analogen Reglersignalweg ist gegenüber einem mittels Rechenprogramm in Digitaltechnik realisierten Regler eine erhebliche Rechenleistung eingespart, da das in relativ kurzen Abtastintervallen vorzunehmende Abarbeiten der Reglerdifferenzen-Gleichung entfällt. Mittels der digitalen Einstellung des Reglers lassen sich über den Host-Prozessor auf einfache Weise Übertragungsfunktion bzw. Reglerparameter einstellen. Dieses kann vorzugsweise über einen Busanschluß erfolgen. Es kann aus mehreren, durch entsprechende Reglergrundschaltungen bereitgehaltenen Übertragungsfunktionen die für die jeweilige Regelungsaufgabe geeignete Übertragungsfunktion durch digitale Ansteuerung ausgewählt werden. Zur Erzeugung von den verschiedenen Grundtypen (z. B. P-, D- oder I-Typ) abweichenden Übertragungsfunktionen können auch verschiedene Reglergrundschaltungen miteinander kombiniert werden. Die die Übertragungsfunktionen der Reglergrundschaltungen bestimmenden Reglerparameter werden durch Ansteuerung von Switched-Capacitors-Elementen (SC-Elementen) eingestellt.

Weiterbildungen der Erfindung sind in den Unteransprüchen gekennzeichnet.

### Zeichnung

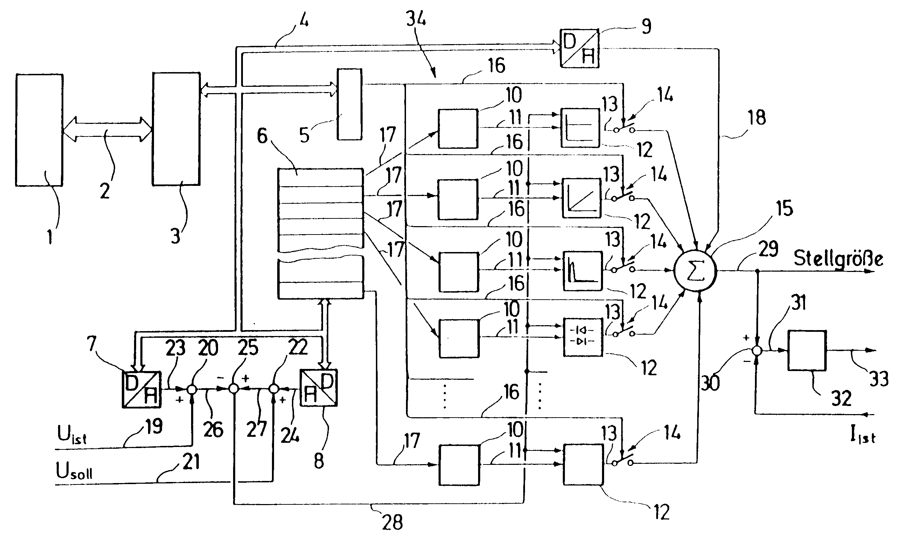

Die Erfindung wird im folgenden anhand der Figur näher erläutert. Diese zeigt:
ein Blockschaltbild der erfindungsgemäßen Regelungsanordnung.

Ein Host-Prozessor 1 ist über ein Bus 2 an ein Bus-Interface 3 angeschlossen. Ferner ist ein weiterer Bus 4 vorgesehen, der an das Bus-Interface 3, ein Steuer-Register 5, ein Parameter-Register 6 und an Digital/Analog-Wandler 7, 8 und 9 angeschlossen ist.

Die Regelungsanordnung weist ferner mehrere Steuerschaltungen 10 auf, die über Leitungen 11 mit Reglergrundschaltungen 12 in Verbindung stehen. Die beiden Punktreihen deuten in der Figur an, daß zusätzlich zu den dargestellten Steuerschaltungen 10 und Reglergrundschaltungen 12 noch weitere derartige Baugruppen vorgesehen sein können.

Die Ausgänge 13 der Reglergrundschaltungen 12 stehen über elektronische Schalter 14 mit einer Summierstelle 15 in Verbindung. Die elektronischen Schalter 14 werden über Leitungen 16 von dem Steuer-Register 5 angesteuert. Ferner stehen die Steuerschaltungen 10 über Leitungen 17 mit dem Parameter-Register 6 in Verbindung. Der Ausgang des Digital/Analog-Wandlers 9 ist über eine Leitung 18 mit der Summierstelle 15 verbunden.

Der analoge Istwert Uᵢₛₜ wird der Regelungsanordnung über eine Leitung 19 zugeführt, die an einen Summierpunkt 20 angeschlossen ist. Der Sollwert Uₛₒₗₗ gelangt über eine Leitung 21 zu einem weiteren Summierpunkt 22. Über Leitungen 23 und 24 stehen die Digital/Analog-Wandler 7 und 8 mit den Summierpunkten 20 bzw. 22 in Verbindung. Ferner ist ein Summenpunkt 25 vorgesehen, der über Leitungen 26 und 27 mit den Summierpunkt 20 bzw. 22 verbunden ist. Die Anordnung ist dabei derart ausgebildet, daß der Istwert Uᵢₛₜ dem Summenpunkt 25 mit negativem und der Sollwert Uₛₒₗₗ dem Summenpunkt 25 mit positivem Vorzeichen zugeleitet wird.

Vom Summenpunkt 25 geht eine Leitung 28 aus, die an die einzelnen Reglergrundschaltungen 12 angeschlossen ist.

Auf der Ausgangsleitung 29 stellt die Regelungsanordnung die Stellgröße zur Verfügung. Die Ausgangsleitung 29 führt - mit positivem Vorzeichen - zu einem weiteren Summierpunkt 30, dem - mit negativem Vorzeichen - ein Istwert-Strom Iᵢₛₜ zugeführt wird. Der Ausgang 31 des Summierpunktes 30 ist an einen Pulsbreitenmodulator 32 angeschlossen, der einen Ausgang 33 aufweist.

Aus dem vorstehenden wird deutlich, daß die Summierpunkte 20 und 22, der Summenpunkt 25, die Reglergrundschaltungen 12, die elektronischen Schalter 14, die Summierstelle 15 und der Summierpunkt 30 in einem analog aufgebauten Signalpfad liegen, der analoge Größen führt. Über den Bus 2 und den Bus sowie die Leitungen 17 und gegebenenfalls auch die Leitungen 11 und/oder 16 werden demgegenüber jedoch digitale Signale geleitet. Demgemäß wird eine digitale Einstell-Anordnung 34 gebildet, die sich aus dem Steuer-Register 5, dem Digital/Analog-Wandler 9, den elektronischen Schaltern 14, dem Parameter-Register 6 und den Steuerschaltungen 10 zusammensetzt. Diese Einstell-Anordnung 34 kann vom Host-Prozessor 1 über den Bus 2 sowie das Bus-Interface 3 und den Bus 4 gesteuert werden.

Aus der Figur ist ersichtlich, daß die einzelnen Reglergrundschaltungen 12 die Realisierung unterschiedlicher Regler-Grundfunktionen ermöglichen; so ist z. B. eine P-Charakteristik (proportionales Verhalten), I-Charakteristik (integrales Verhalten) oder eine D-Charakteristik (differentiales Verhalten) vorgesehen sowie weitere, je nach Bedarf zu definierenden Funktionen, wie Schaltfunktionen, Kennlinienfunktionen usw. Über die Leitungen 16 lassen sich vom Steuer-Register 5 die elektronischen Schalter 14 beliebig ansteuern, so daß entsprechend ausgewählte Reglergrundschaltungen 12 an die Summierstelle 15 gelegt werden können. Hierdurch ist es möglich, die Übertragungsfunktion der jeweiligen Reglergrundschaltungen 12 in den analogen Signalpfad einzuschalten. Denkbar ist die Auswahl von nur einer Reglergrundschaltung 12, wodurch z. B. eine Regler-Grundfunktion realisiert werden kann. Sofern mehrere Reglergrundschaltungen 12 an die Summierstelle 15 angeschlossen werden, ergibt sich eine entsprechend zusammengesetzte Übertragungsfunktion. Letztere kann demgemäß individuell - der jeweiligen Regelungsaufgabe entsprechend - über das Steuer-Register 5 durch Ansteuerung von dem Host-Prozessor 1 ausgewählt und/oder während des Betriebs variiert werden.

Das Parameter-Register 6 ist - wie zuvor beschrieben - ebenfalls an den Host-Prozessor 1 angeschlossen, so daß auch hier der Host-Prozessor 1 eine entsprechende Steuerfunktion ausüben kann. Über die Leitungen 17 werden die Schaltfrequenzen der Steuerschaltungen 10 gesteuert. Die jeweils eingestellte Schaltfrequenz wird über die entsprechende Leitung 11 der zugehörigen Reglergrundschaltung 12 zugeleitet und dient der Steuerung von Switched-Capacitor-Elementen (SC-Elementen), mit denen sich die Reglerparameter der einzelnen Reglergrundschaltungen 12 variieren lassen. Die Reglerparameter legen die jeweils zugehörige Übertragungsfunktion in ihrer Größe fest. Zusätzlich oder alternativ können die Reglerparameter auch über Kapazitätsänderungen der SC-Elemente gesteuert werden. Dieses kann durch Hinzufügen oder Abschalten von weiteren Kondensatoren erfolgen.

Dem Summenpunkt 25 der beschriebenen Regelungsanordnung werden über die Leitungen 19 und 21 sowie die Summierpunkte 20 und 22 und die Leitungen 26 und 27 der Istwert Uᵢₛₜ und der Sollwert Uₛₒₗₗ zugeführt. Am Ausgang des Summenpunktes 25 wird ein Regeldifferenz-Signal gebildet, das über die Leitung 28 den Reglergrundschaltungen 12 zugeführt wird. Die durch die Reglergrundschaltungen 12 gebildete Übertragungsfunktion richtet sich nach dem Schaltzustand der vom Host-Prozessor 1 gesteuerten elektronischen Schalter 14. Demgemäß wird das Reglerdifferenz-Signal - entsprechend der gewählten Übertragungsfunktion - bearbeitet und das Ergebnis der Summierstelle 15 zugeleitet. Überdies kann der Summierstelle 15 über den Digital/Analog-Wandler 9 eine vom Host-Prozessor 1 beeinflußbare Stellgrößen-Komponente zugeführt werden. Bei dieser Stellgrößen-Komponente kann es sich um einen Kennfeldwert oder aber auch um einen Korrekturwert handeln.

An der Ausgangsleitung 29 liegt die analoge Stellgröße an, die zur Steuerung eines nicht dargestellten Stellglieds verwendet werden kann. Sofern die Stellgröße in Schaltsignale, beispielsweise für Endstufen-Transistoren, umgesetzt werden sollen, ist eine Zuleitung der Stellgröße zum Summierpunkt 30 und von dort zum Pulsbreitenmodulator 32 vorgesehen. Dieser stellt an seinem Ausgang 33 ein der Stellgröße entsprechendes Pulsbreiten-Signal zur Verfügung. Für die genannten, im Schaltbetrieb arbeitenden Endstufen ist vorzugsweise ein unterlagerter Strom-Regelkreis vorgesehen, welcher an den Summierpunkt 30 angeschlossen ist. Letzterem wird der Istwert-Strom Iᵢₛₜ zugeleitet.

Sofern ein kontinuierlicher Endstufenbetrieb erfolgen soll, ist alternativ anstelle des Pulsbreitenmodulators 33 ein entsprechender Steuerblock einsetzbar.

Alternativ zur Zuleitung von Sollwert Uₛₒₗₗ und Istwert Uᵢₛₜ als Analogwerte über die Leitungen 21 und 19 ist - nach einer anderen Betriebsart der Regelungsanordnung vorgesehen, daß Soll- und Istwert - vom Host-Prozessor 1 kommend - über den Bus 2, das Bus-Interface 3 und den Bus 4 den Digital/Analog-Wandlern 7 und zugeführt werden. Die dort gebildeten Analogsignale werden dann über die Leitungen 23 und 24 sowie die Summierpunkte 20 und 22 und die Leitungen 26 und 27 dem Summenpunkt 25 zugeführt.

Mithin sind vom Host-Prozessor 1 das Steuer-Register 5 zur Bestimmung der Übertragungsfunktion, das Parameter-Register 6 zur Bestimmung der Reglerparameter, der Digital/Analog-Wandler 9 zur Kennfeld- und/oder Korrekturwert-Aufschaltung und die Digital/Analog-Wandler 7 und 8 für die Zuführung von Soll- und Istwert zugänglich.

Vorzugsweise ist die beschriebene Regelungsanordnung als integrierte Schaltung (IC-Schaltung) und/oder aus Hybrid-Schaltkreisen aufgebaut. Ein derartiges Regler-IC oder -Hybrid kann als Peripherie-Baustein für Mikroprozessoren bzw. Mikrocontrollern ausgelegt sein.

Die erfindungsgemäße Regelungsanordnung besitzt den Vorteil, daß im Regler keine Analog/Digital-Wandlung und Digital/Analog-Rückwandlung von analogen Signalen notwendig ist. Über digitale Signalpfade läßt sich eine Variation der Reglerstruktur (Übertragungsfunktion) und der Reglerparameter durch den Host-Prozessor vornehmen. Über die genannten SC-Elemente lassen sich im Hinblick auf die Übertragungsfunktion präzise reproduzierbare Reglergrundsschaltungen realisieren.

## Patentansprüche

1. Elektrische Regelungsanordnung zur Erzeugung analoger Stellgrößen, mit
- einer eine bestimmte Reglerstruktur aufweisenden Reglerschaltung,
- deren von der Reglerstruktur bestimmte Übertragungsfunktion durch Reglerparameter größenmäßig festgelegt ist und
- der ein analoges, aus Soll- und Istwert gebildetes Regeldifferenz-Signal zugeführt wird,
- einer Einstell-Anordnung (34),
- die aufgrund digitaler Eingangsgrößen eine Variation der Übertragungsfunktion gestattet,
dadurch gekennzeichnet, daß
die Einstelle-Anordnung (34) derart ausgestaltet ist, daß
- zur Variation der Übertragungsfunktion der aus wenigstens zwei Reglergrundschaltungen (12) mit unterschiedlicher Reglerstruktur bestehenden Reglerschaltung Schaltmittel (14) vorgesehen sind, wobei mittels der Schaltmittel die Reglergrundschaltungen (12) ausgewählt und in den analogen Regelkreis geschaltet werden können, und/oder
- zur Variation der Übertragungsfunktion der Reglerschaltung die Reglerparameter mittels Switched-Capacitors-Elemente eingestellt werden.

2. Regelungsanordnung nach Anspruch 1, **dadurch gekennzeichnet,** daß die Einstell-Anordnung (34) an einen Bus (2,4) angeschlossen ist, über den die Reglerstruktur und/oder die Reglerparameter variiert werden können.

3. Regelungsanordnung nach einem der vorhergehenden Ansprüche, **gekennzeichnet durch** ein Bus-Interface (3), das über den Bus (4) mit einem Steuer-Register (5) zum Einschalten der jeweiligen Reglergrundschaltung bzw. -grundschaltungen (12) und mit einem Parameter-Register (6) zum Einstellen der jeweiligen Reglerparameter verbunden ist.

4. Regelungsanordnung nach einem der vorhergehenden Ansprüche, **dadurch gekennzeichnet**, daß das Bus-Interface (3) mit einem Host-Prozessor (1) verbunden ist.

5. Regelungsanordnung nach einem der vorhergehenden Ansprüche, dadurch gekennzeichnet, daß die Schaltmittel als elektronische Schalter (14) über ein Steuerregister (5) gesteuert werden und die Reglergrundschaltungen (12) über die elektronischen Schalter mit einer Summierstelle (15) verbunden werden.

6. Regelungsanordnung nach einem der vorhergehenden Ansprüche, dadurch gekennzeichnet, daß die Steuerschaltungen (10) durch Parameter-Register (6) gesteuert werden.

7. Regelungsanordnung nach einem der vorhergehenden Ansprüche, **dadurch gekennzeichnet,** daß die Steuerschaltungen (10) über Taktfrequenz- und/oder Kapazitätsänderungen der SC-Elemente die Reglerparameter steuern.

8. Regelungsanordnung nach einem der vorhergehenden Ansprüche, **dadurch gekennzeichnet,** daß der Sollwert (Uₛₒₗₗ) und der Istwert (Uᵢₛₜ) einem Summenpunkt (25) zugeführt werden, der an die Reglergrundschaltungen (12) angeschlossen ist.

9. Regelungsanordnung nach einem der vorhergehenden Ansprüche, **dadurch gekennzeichnet,** daß jeweils ein Digital/Analog-Wandler (D/A-Wandler 7,8) für die Zuleitung des vom Bus-Interface (3) kommenden Soll- und Istwertes (Uₛₒₗₗ, Uᵢₛₜ) an den Summenpunkt (25) angeschlossen ist.

10. Regelungsanordnung nach einem der vorhergehenden Ansprüche, **gekennzeichnet durch** einen an Bus (4) und an Summierstelle (15) angeschlossenen Digital/Analog-Wandler (9) zur Aufschaltung einer Stellgrößen-Komponente.

11. Regelungsanordnung nach einem der vorhergehenden Ansprüche, **dadurch gekennzeichnet,** daß die Stellgrößen-Komponente ein Kennfeldwert oder ein Korrekturwert ist.

12. Regelungsanordnung nach einem der vorhergehenden Ansprüche, **dadurch gekennzeichnet,** daß an den Ausgang (Ausgangsleitung 29) der Summierstelle (15) ein Pulsbreitenmodulator (32) zur Erzeugung von Schaltsignalen für eine Stellglied-Endstufe angeschlossen ist.

13. Regelungsanordnung nach einem der vorhergehenden Ansprüche, **dadurch gekennzeichnet,** daß an den Ausgang des Pulsbreitenmodulators (32) zusätzlich eine unterlagerte Stromregelung angeschlossen ist.

14. Regelungsanordnung nach einem der vorhergehenden Ansprüche, **dadurch gekennzeichnet,** daß Soll- und Istwert (Uₛₒₗₗ, Uᵢₛₜ) elektrische Spannungen sind und daß mit der Stromregelung der Istwert-Strom (Iᵢₛₜ) geregelt wird.

15. Regelungsanordnung nach einem der vorhergehenden Ansprüche, **gekennzeichnet durch** den Aufbau als integrierte Schaltung (IC-Schaltung) und/oder aus Hybrid-Schaltkreisen.

16. Verfahren zur Regelung analoger Größen mittels einer eine analoge Signalverarbeitung vornehmenden Reglerschaltung, vorzugsweise für den Betrieb einer Regelungsanordnung nach einem der vorhergehenden Ansprüche mit
- einer eine bestimmte Reglerstruktur aufweisenden Reglerschaltung,
- deren von der Reglerstruktur bestimmte Übertragungsfunktion durch Reglerparameter größenmäßig festgelegt ist und
- der ein analoges, aus Soll- und Istwert gebildetes Regeldifferenz-Signal zugeführt wird,
wobei die Übertragungsfunktion der Reglerschaltung durch digitale Einstellung getätigt wird, dadurch gekennzeichnet, daß zur Variation der Übertragungsfunktion der aus wenigstens zwei Reglergrundschaltungen (12) mit bestimmter Reglerstruktur bestehenden Reglerschaltung
- Reglergrundschaltungen (12) ausgewählt und in den analogen Regelkreis geschaltet werden, und/oder
- die die Übertragungsfunktionen der Reglergrundschaltungen (12) bestimmenden Reglerparameter durch Ansteuerung von Switched-Capacitors-Elementen eingestellt werden.

17. Verfahren nach Anspruch 17, **dadurch gekennzeichnet,** daß die Übertragungsfunktion und die Reglerparameter über einen Busanschluß variiert werden können.

18. Verfahren nach Anspruch 16 und/oder 17, **dadurch gekennzeichnet,** daß aus mehreren, durch entsprechende Reglergrundschaltungen bereitgehaltenen Übertragungsfunktionen die für die jeweilige Regelungsaufgabe geeignete Übertragungsfunktion durch digitale Ansteuerung ausgewählt wird.

19. Verfahren nach einem der vorhergehenden Ansprüche 16 bis 18, **dadurch gekennzeichnet,** daß die verschiedenen Reglergrundschaltungen (12) miteinander kombiniert werden.

20. Verfahren nach einem der vorhergehenden Ansprüche 16 bis 19, **dadurch gekennzeichnet,** daß die Anwahl der Reglergrundschaltung bzw. der Reglergrundschaltungen (12) durch einen Prozessor (Host-Prozessor 1) erfolgt.

## Claims

1. Electrical closed-loop control arrangement for the generation of analog manipulated variables, with
- a controller circuit having a certain controller type,
- the transfer function of which circuit, determined by the controller type, is fixed in terms of magnitude by controller parameters and
- to which circuit an analog control difference signal, formed by set value and actual value, is fed,
- a setting arrangement (34),
- which allows a variation of the transfer function on the basis of digital input variables,
characterized in that
the setting arrangement (34) is designed such that
- for the variation of the transfer function of the controller circuit comprising at least two basic controller circuits (12) of different controller types, switching means (14) are provided, it being possible by means of the switching means for the basic controller circuits (12) to be selected and connected into the analog control loop, and/or
- for the variation of the transfer function of the controller circuit, the controller parameters are set by means of switched-capacitor elements.

2. Closed-loop control arrangement according to Claim 1, characterized in that the setting arrangement (34) is connected to a bus (2,4), via which the controller type and/or the controller parameters can be varied.

3. Closed-loop control arrangement according to one of the preceding claims, characterized by a bus interface (3), which is connected via the bus (4) to a control register (5) for switching-on the respective basic controller circuit or circuits (12) and to a parameter register (6) for setting the respective controller parameters.

4. Closed-loop control arrangement according to one of the preceding claims, characterized in that the bus interface (3) is connected to a host processor (1).

5. Closed-loop control arrangement according to one of the preceding claims, characterized in that the switching means are controlled as electronic switches (14) by means of a control register (5), and the basic controller circuits (12) are connected via the electronic switches to a summing point (15).

6. Closed-loop control arrangement according to one of the preceding claims, characterized in that the control circuits (10) are controlled by parameter registers (6).

7. Closed-loop control arrangement according to one of the preceding claims, characterized in that the open-loop control circuits (10) control the controller parameters via clock-frequency and/or capacitance changes of the SC elements.

8. Closed-loop control arrangement according to one of the preceding claims, characterized in that the set value (Uₛₑₜ) and the actual value (U_{actual}) are fed to a sum point (25), which is connected to the basic controller circuits (12).

9. Closed-loop control arrangement according to one of the preceding claims, characterized in that a digital/analog converter (D/A converter 7,8) for the feeding of the set value and actual value (Uₛₑₜ, U_{actual}), coming from the bus interface (3), is connected in each case to the sum point (25).

10. Closed-loop control arrangement according to one of the preceding claims, characterized by a digital/analog converter (9), connected to bus (4) and to summing point (15) for applying a manipulated variable component.

11. Closed-loop control arrangement according to one of the preceding claims, characterized in that the manipulated variable component is a characteristic diagram value or a correction value.

12. Closed-loop control arrangement according to one of the preceding claims, characterized in that a pulse-width modulator (32) is connected to the output (output line 29) of the summing point (15) for the generation of switching signals for an actuator output stage.

13. Closed-loop control arrangement according to one of the preceding claims, characterized in that an inner current control loop is additionally connected to the output of the pulse-width modulator (32).

14. Closed-loop control arrangement according to one of the preceding claims, characterized in that set value and actual value (Uₛₑₜ, U_{actual}) are electric voltages and in that the actual value current (I_{actual}) is controlled by the current control loop.

15. Closed-loop control arrangement according to one of the preceding claims, characterized by the construction as integrated circuit (IC) and/or from hybrid circuits.

16. Process for the closed-loop controlling of analog variables by means of a controller circuit performing an analog signal processing, preferably for the operation of a closed-loop control arrangement according to one of the preceding claims, with
- a controller circuit having a certain controller type,
- the transfer function of which, determined by the controller type, is fixed in terms of magnitude by controller parameters and
- to which circuit an analog control difference signal, formed by set value and actual value, is fed,
the transfer function of the controller circuit being effected by digital setting, characterized in that, for the variation of the transfer function of the control circuit comprising at least two basic controller circuits (12) of a certain controller type,
- basic controller circuits (12) are selected and connected into the analog control loop, and/or
- the controller parameters determining the transfer functions of the basic controller circuits (12) are set by driving switched-capacitor elements.

17. Process according to Claim 16, characterized in that the transfer function and the controller parameters can be varied via a bus connection.

18. Process according to Claim 16 and/or 17, characterized in that the transfer function suitable for the respective control task is selected from a plurality of transfer functions, kept available by corresponding basic controller circuits, by digital activation.

19. Process according to one of the preceding claims 16 to 18, characterized in that the various basic controller circuits (12) are combined with one another.

20. Process according to one of the preceding claims 16 to 19, characterized in that the selection of the basic controller circuit or of the basic controller circuits (12) is performed by a processor (host processor 1).

## Revendications

1. Dispositif de régulation électrique pour créer des grandeurs de réglage analogiques, comprenant :
- un circuit de régulation ayant une structure de régulation déterminée,
- dont la fonction de transfert définie par la structure du régulateur est fixée en grandeur par les paramètres de régulation et,
- qui reçoit un signal de différence de réglage, analogique formé à partir de la valeur de consigne et de la valeur réelle,
- un dispositif de réglage (34),
- qui permet une variation des fonctions de transfert grâce à des grandeurs d'entrée numériques, données,
caractérisé en ce que
le dispositif de réglage (34) est conçu pour
- comporter des moyens de commutation (14) modifiant la fonction de transfert du circuit de régulation composé d'au moins deux circuits de base de régulation (12) à structure de régulation différente, les moyens de commutation permettant de sélectionner les circuits de base de régulation (12) et de les brancher dans le circuit de régulation analogique et/ou
- faire varier la fonction de transfert, le circuit de régulation permet pour cela de régler les paramètres de régulation à l'aide d'éléments capacitifs commutés.

2. Dispositif de régulation selon la revendication 1, caractérisé en ce que le dispositif de réglage (34) est relié à un bus (2, 4) qui permet de faire varier la structure de régulation et/ou les paramètres de régulation.

3. Dispositif de régulation selon l'une des revendications précédentes, caractérisé par une interface de bus (3) reliée par le bus (4) à un registre de commande (5) pour brancher le ou les circuits de base de régulation (12) respectifs et un registre de paramètres (6) pour régler les paramètres de réglage respectifs.

4. Dispositif de régulation selon l'une des revendications précédentes, caractérisé en ce que l'interface de bus (3) est reliée à un processeur hôte (1).

5. Dispositif de régulation selon l'une des revendications précédentes, caractérisé en ce que les moyens de commutation sont des commutateurs électroniques (14) commandés par un registre de commande (5) et les circuits de base de régulation (12) sont reliés à un point d'addition (15) par les commutateurs électroniques.

6. Dispositif de régulation selon l'une des revendications précédentes, caractérisé en ce que les circuits de commande (10) sont commandés par des registres de paramètres (6).

7. Dispositif de régulation selon l'une des revendications précédentes, caractérisé en ce que les circuits de commande (10) commandent les paramètres de régulation par variation de la fréquence d'horloge et/ou de la capacité des éléments SC.

8. Dispositif de régulation selon l'une des revendications précédentes, caractérisé en ce que la valeur de consigne (U_{cons}) et la valeur réelle (U_{réel}) sont fournies à un point d'addition (25) qui est relié aux circuits de base de régulation (12).

9. Dispositif de régulation selon l'une des revendications précédentes, caractérisé en ce que chaque fois un convertisseur numérique/analogique (convertisseur D/A 7,8) est relié au point d'addition (25) pour fournir la valeur de consigne et la valeur réelle (U_{cons}, U_{réel}) venant de la ligne d'alimentation de l'interface de bus (3).

10. Dispositif de régulation selon l'une des revendications précédentes, caractérisé par un convertisseur numérique/analogique (9) relié au bus (4) et au point d'addition (15) pour appliquer une composante de grandeur de réglage.

11. Dispositif de régulation selon l'une des revendications précédentes, caractérisé en ce que la composante de grandeur de réglage est une valeur d'un champ de caractéristiques ou une valeur de correction.

12. Dispositif de régulation selon l'une des revendications précédentes, caractérisé en ce qu'à la sortie (ligne de sortie 29) du point d'addition (15) il est prévu un modulateur de largeur d'impulsions (32) pour créer des signaux de commutation destinés à un étage de sortie d'un organe de réglage.

13. Dispositif de régulation selon l'une des revendications précédentes, caractérisé en ce qu'à la sortie du modulateur de largeur d'impulsions (32) il est prévu en outre une régulation d'intensité, dominée.

14. Dispositif de régulation selon l'une des revendications précédentes, caractérisé en ce que la valeur de consigne et la valeur réelle (U_{cons}, U_{réel}) sont des tensions électriques et la régulation de courant règle la valeur réelle de l'intensité (I_{réel})

15. Dispositif de régulation selon l'une des revendications précédentes, caractérisé par son montage sous forme de circuit intégré (circuit IC) et/ou de circuit hybride.

16. Procédé de régulation de grandeurs analogiques à l'aide d'un circuit de régulation qui traite les signaux de manière analogique, de préférence pour mettre en oeuvre un dispositif de régulation selon l'une des revendications précédentes, comprenant :
- un circuit de régulation ayant une structure de régulation déterminée,
- dont la fonction de transfert définie par la structure de réglage est fixée en grandeur par les paramètres de régulation et,
- ce circuit reçoit un signal de différence de régulation, analogique, formé à partir de la valeur de consigne et de la valeur réelle,
la fonction de transfert du circuit de régulation étant actionnée par réglage numérique, caractérisé en ce que pour modifier la fonction de transfert du circuit de régulation à structure de régulation définie par au moins deux circuits de base de régulation (12),
- on sélectionne les circuits de base de régulation (12) et on les branche dans des circuits de régulation analogiques et/ou,
- on règle les paramètres de réglage définissant les fonctions de transfert du circuit de base de régulation (12) par la commande d'éléments à condensateur commuté.

17. Procédé selon la revendication 16, caractérisé en ce que la fonction de transfert et les paramètres de régulation peuvent être modifiés par un branchement de bus.

18. Procédé selon la revendication 16 et/ou 17, caractérisé en ce que les fonctions de transfert offertes par plusieurs circuits de régulation de base, correspondants, permettent le choix de la fonction de transfert convenant le mieux pour le problème de régulation respectif, en choisissant par commande numérique.

19. Procédé selon l'une des revendications 16 à 18, caractérisé en ce que les circuits de base de régulation (12), différents, sont combinés les uns aux autres.

20. Procédé selon l'une des revendications précédentes 16 à 19, caractérisé en ce que le choix du circuit de base de régulation ou des circuits de base de régulation (12) est assuré par un processeur (processeur hôte 1).
